(19) Europäisches Patentamt
European Patent Office
Office européen des brevets

(11) Veröffentlichungsnummer: **0 386 499**
**A1**

(12) # EUROPÄISCHE PATENTANMELDUNG

(21) Anmeldenummer: **90102918.1**

(22) Anmeldetag: **15.02.90**

(51) Int. Cl.5: **C08K 5/43, C08L 15/00, C08L 23/16, C08L 23/22**

(30) Priorität: **28.02.89 DE 3906188**

(43) Veröffentlichungstag der Anmeldung:
**12.09.90 Patentblatt 90/37**

(84) Benannte Vertragsstaaten:
**DE FR GB IT**

(71) Anmelder: **BAYER AG**

**D-5090 Leverkusen 1 Bayerwerk(DE)**

(72) Erfinder: **Thörmer, Joachim, Dr.**
**Emil-Nolde-Strasse 39**
**D-5090 Leverkusen 1(DE)**
Erfinder: **Buding, Hartmuth, Dr.**
**Liebermannstrasse 1**
**D-4047 Dormagen(DE)**
Erfinder: **Pabst, Jürgen, Dr.**
**Eckenerstrasse 32**
**D-5205 St. Augustin 2(DE)**

(54) **Schwefel-vulkanisierbare Kautschukmassen mit vermindertem Ausblüheffekt.**

(57) Die Vulkanisation von C-C-doppelbindungsarmem Kautschuk mit einem Vulkanisiersystem enthaltend Schwefel, Thiurambeschleuniger und N-Trichlormethylsulfenyl-benzolsulfanilid ergibt Vulkanisate mit verbesserten Eigenschaften.

EP 0 386 499 A1

## Schwefel-vulkanisierbare Kautschukmassen mit vermindertem Ausblüheffekt

Die Erfindung betrifft vulkanisierbare Kautschukmassen, die Schwefel als Vulkanisiermittel, eine Thiuramverbindung als Beschleuniger und ein bestimmtes Benzolsulfanilid als Zusatz zur Verminderung von Ausblühungen enthalten, ein Verfahren zur Herstellung dieser Kautschukmassen durch Mischen der Komponenten und die Verwendung dieser Kautschukmassen zur Herstellung von Vulkanisaten.

Als Vulkanisationsbeschleuniger werden bekanntlich Substanzen bezeichnet, die die Vulkanisationszeit verkürzen oder eine Vulkanisation bei niedrigerer Temperatur ermöglichen; vgl. Ullmanns Encyclopädie der technischen Chemie, 3. Aufl., Urban & Schwarzenberg, München-Berlin 1957, S. 383 ff. Zur Entfaltung der vollen Wirksamkeit der Vulkanisationsbeschleuniger werden gegebenenfalls Zusatzbeschleuniger mitverwendet.

Für die Schwefelvulkanisation werden häufig sogenannte "EV-Systeme" ("EV" = efficient vulcanization) eingesetzt, wobei man als Vulkanisationsbeschleuniger zumeist Thiuramverbindungen wie Tetraalkylthiurammonosulfide (z.B. Tetramethylthiurammonosulfid), Tetraalkylthiuramtetrasulfide (z.B. Tetramethylthiuramtetrasulfid) und vorzugsweise Tetraalkylthiuramdisulfide (z.B. Tetramethylthiuramdisulfid, nachfolgend: TMTD) verwendet. Wegen ihrer ausgezeichneten Wirkung werden diese Thiuramverbindungen auch als Ultrabeschleuniger bezeichnet; insbesondere führen sie zu einer guten Heißluftbeständigkeit der damit hergestellten Vulkanisate.

Thiuramverbindungen haben die Eigenschaft, daß sie selbst oder die während der Vulkanisation daraus entstehenden Umsetzungsprodukte zum Ausblühen neigen; Folge ist eine unerwünschte Belagbildung auf dem Vulkanisat. Die Ausblühtendenz wird u.a. von der Art des Kautschuks und von der Konzentration der Thiuramverbindung beeinflußt (vergl. W. Hofmann in Gummi-Asbest-Kunststoffe 9 (1986), S. 422 ff).

Vulkanisate aus Kautschuken mit geringem Gehalt an C=C-Doppelbindungen wie EPDM, Butylkautschuk und vorzugsweise Nitrilkautschuk dessen C-C-Doppelbindungen selektiv, und zwar teilweise oder vollkommen hydriert sind, weisen oft einen niedrigen Vernetzungsgrad auf, der an niedrigen Spannungswerten und an einem mäßigen Druckverformungsrest (nachfolgend: DVR; allgemein auch Compression Set genannt; gemessen nach Druckverformung in der Hitze, z.B. in Heißluft oder in heißem Öl) erkennbar ist. Der Anhebung des DVR durch höhore Mengen Thiuramverbindung sind wegen des geschilderten Ausblühphänomens Grenzen gesetzt.

Überraschenderweise wurde nun gefunden, daß ein Vulkanisiersystem enthaltend Schwefel in geringer Menge, Thiurambeschleuniger und N-Trichlormethylsulfenylbenzolsulfanilid

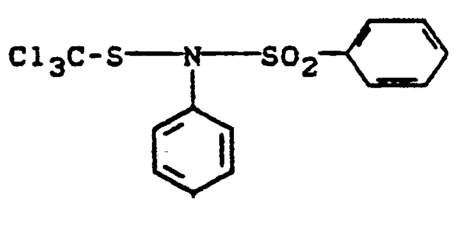

die Nachteile des Standes der Technik überwindet.

Gegenstand der Erfindung sind also vulkanisierbare Kautschukmassen auf Basis von C-C-doppelbindungsarmem Kautschuk enthaltend

0,2 bis 1 Gew.-% Schwefel,

1 bis 3,5 Gew.-% Thiurambeschleuniger und

0,1 bis 3, vorzugsweise 0,15 bis 1, Gew.-% N-Trichlormethylsulfenyl-benzolsulfanilid,

wobei sich die Prozentangaben jeweils auf den zu vulkanisierenden Kautschuk beziehen.

Weiterer Gegenstand der Erfindung ist ein Verfahren zur Herstellung dieser Kautschukmassen durch Mischen der Komponenten und ihre Verwendung zur Herstellung von Vulkanisaten.

C-C-doppelbindungsarme Kautschuke im Sinne der Erfindung umfassen solche mit Iodzahlen von 2 bis 35, vorzugsweise von 3 bis 30, insbesondere von 5 bis 25. Die Bestimmung der Iodzahlen erfolgt im allgemeinen durch Addition von Iodchlorid in Eisessig nach Wijs, DIN 53 241, Teil 1. Die Iodzahl definiert die Iodmenge in Gramm, die von 100 g Substanz chemisch gebunden wird. Beispiele für bevorzugte Kautschuke sind EPDM, Butylkautschuk und vorzugsweise hydrierter Nitrilkautschuk.

Die Kautschuke besitzen vorzugsweise Glasübergangstemperaturen unter 0 °C, insbesondere unter

-10 ° C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C-C-Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Den bevorzugten hydrierten Nitrilkautschuken liegen Butadien/Acrylnitril-Copolymerisate mit einem Gehalt an copolymerisiertem Acrylnitril von 5 bis 60, vorzugsweise 10 bis 50 Gew.-% zugrunde. "Hydriert" bedeutet in diesem Zusammenhang, daß 90 bis 98,5, vorzugsweise 95 bis 98 % der hydrierbaren C-C-Doppelbindungen hydriert sind. Der Hydriergrad kann IR-spektroskopisch bestimmt werden.

Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503. Hydrierter Nitrilkautschuk zeichnet sich vor allem durch vergleichsweise hohe Stabilität gegen Oxidation aus.

Die für das erfindungsgemäße Verfahren geeigneten Kautschuke besitzen in der Regel Mooney-Viskositäten (DIN 53 523), von 10 bis 150, vorzugsweise von 25 bis 80 (ML 1 + 4)/100 ° C.

Bevorzugte Thiurambeschleuniger umfassen die obengenannten Tetraalkylthiurammono- und -polysulfide, wobei die Alkylgruppen in der Regel 1 bis 4, vorzugsweise 1 oder 2 C-Atome besitzen.

Das erfindungsgemäß zu verwendende N-Trichlormethylsulfenyl-benzolsulfanilid ist bekannt und kann beispielsweise von der Bayer AG, Leverkusen, unter der Bezeichnung ®Vulkalent E bezogen werden.

Den Kautschuken kann man vor der Vulkanisation Vulkanisationshilfsmittel und - je nach Bedarf - Aktivatoren, Füllstoffe, wie z.B. Ruß, Weichmacher, Alterungsschutzmittel und/oder Verarbeitungshilfsmittel in üblichen Mengen zusetzen.

Bevorzugte Vulkanisationshilfsmittel, die im allgemeinen in Mengen von 0,1 bis 2, vorzugsweise 0,2 bis 1, Gew.-% (bezogen auf Kautschuk) eingesetzt werden, umfassen Thiazolbeschleuniger wie
2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Die bedeutendsten anorganischen Aktivatoren sind die Metalloxide, insbesondere Zinkoxid. In einzelnen Fallen wird auch Magnesiumoxid oder Calciumhydroxid verwendet.

Als Verarbeitungshilfsmittel kommen beispielsweise Fettsäuren, wie z.B. Stearinsäure, und ihre Zinksalze in Frage, die auch von Vorteil für die Vulkanisateigenschaften sein können.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 $sec^{-1}$, vorzugsweise 1 bis 200 $sec^{-1}$ arbeiten.

Die Vulkanisation kann bei Temperaturen von 100 bis 200 ° C, vorzugsweise 130 bis 180 ° C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern oft noch verbessern.

Die erfindungsgemäß erhältlichen Vulkanisate sind hervorragende Materialien für Treib- bzw. Zahnriemen, bei denen ihr hohes Rückstellvermögen zur Geltung kommt. Außerdem zeigen sie als Dichtungsmaterialien jeglicher Art ausgezeichnete Eigenschaften und können u. a. als Schlauch-Seele oder -Mantel Verwendung finden.

Beispiele

Als Kautschuk wurde für die nachfolgenden Beispiele ein hydriertes Acrylnitril/Butadien-Copolymerisat mit einem Acrylnitrilgehalt von 33,7 Gew.-%, einem Hydrierungsgrad von 96,4 %, bezogen auf ursprünglich vorhandene C-C-Doppelbindungen, und einer Mooney-Viskosität von 67 (ML 1 + 4) 100 °C eingesetzt.

In einem Laborknetor wurden bei 50 °C 100 Teile Kautschuk 0,5 Minuten lang mastiziert und dann 0,51 Teile Schwefel, 1 Teil Stearinsäure, 2 Teile Zinkoxid, 1 Teil octyliertes Diphenylamin (®Vulkanox OCD der Bayer AG), 0,4 Teile Methylmercaptobenzimidazol (®Vulkanox ZMB2 der Bayer AG) und 45 Teile Ruß (Corax N550 der Fa. Degussa /Wesseling) zugegeben und bis zur Homogenisierung geknetet (4,5 Minuten).

Nach Abkühlen der Kautschukmasse auf ca. 100 °C auf einer Walze wurde ein Beschleunigersystem bestehend aus 2 Teilen Tetramethylthiuramdisulfid (®Vulkacit Thiuram der Bayer AG), 0,5 Teilen Benzothiazyl-2-cyclohexylsulfenamid (®Vulkacit CZ der Bayer AG) und wechselnden Mengen (siehe Tabelle 1) N-Trichlormethylsulfenyl-benzolsulfanilid (®Vulkalent E der Bayer AG) zugemischt.

Die Eigenschaften der erhaltenen Mischungen werden nachfolgend aufgelistet:

Tabelle 1

| Mischungseigenschaften | | | | | |
|---|---|---|---|---|---|
| Beispiele | 1 | 2 | 3 | 4 | 5 |
| N-Trichlormethyl-sulfenyl-benzolsulfanilid (Teile) | - | 0,5 | 1 | 1,5 | 0,4 |
| Zinkstearat (Teile) | - | - | - | - | 2 |
| Anvulkanisierzeit Mooney-Scorch MS-$t_5$/130 °C (min) | 18,5 | 20,9 | 17,9 | 16,2 | 21,9 |
| Vulkameter 160 °C $t_{10}$ (min) | 4,5 | 5,0 | 4,7 | 4,6 | 4,9 |
| $t_{90}$ (min) | 12,6 | 12,7 | 11,7 | 12,4 | 12,9 |
| $F_{max}$ (cN) | 43,8 | 57 | 60 | 61 | 59 |

Die erhaltenen Mischungen wurden 30 Minuten bei 160 °C vulkanisiert. Die Bestimmung der Vulkanisateigenschaften erfolgte an S2-Stäben (2 mm dick) nach ISO-Norm 37-1977; Ergebnisse siehe Tabelle 2.

Tabelle 2

| Vulkanisateigenschaften | | | | | |
|---|---|---|---|---|---|
| Beispiele | 1 | 2 | 3 | 4 | 5 |
| Zugfestigkeit (MPa) | 29 | 28 | 28 | 28 | 29 |
| Bruchdehnung (%) | 520 | 500 | 490 | 470 | 500 |
| Spannungswert $S_{100}$ (MPa) | 3,4 | 3,8 | 3,9 | 4,0 | 3,6 |
| Shore A-Härte | 72 | 73 | 73 | 73 | 72 |
| Druckverformungsrest nach DIN 53 517, Probekörper 2, 70 h/100 °C (%) | 70 | 53 | 55 | 57 | 54 |
| dgl. nach 6-stündiger Temp rung bei 140 °C (%) | 54 | 35 | 38 | 42 | 33 |

## Ansprüche

1. Vulkanisierbare Kautschukmassen auf Basis von C=C-doppelbindungsarmem Kautschuk enthaltend 0,2 bis 1 Gew.-% Schwefel,

1 bis 3,5 Gew.-% Thiurambeschleuniger und
0,1 bis 3 Gew.-% N-Trichlormethylsulfenyl-benzolsulfanilid,
wobei sich die Prozentangaben jeweils auf den zu vulkanisierenden Kautschuk beziehen.

2. Kautschukmassen nach Anspruch 1, enthaltend 0,15 bis 1 Gew.-% N-Trichlormethylsulfenyl-benzolsulfanilid, bezogen auf den zu vulkanisierenden Kautschuk.

3. Verfahren zur Herstellung der Kautschukmassen nach Ansprüchen 1 und 2 durch Mischen der Komponenten.

4. Verwendung der Kautschukmassen nach Ansprüchen 1 und 2 zur Herstellung von Vulkanisaten.

Europäisches Patentamt

# EUROPÄISCHER RECHERCHENBERICHT

Nummer der Anmeldung

EP 90 10 2918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 140 058 (UNIVERSAL OIL PRODUCTS CO.)<br>* Anspruch 3; Beispiel 1; Seite 5, Zeile 38 - Seite 6, Zeile 9; Seite 5, Zeilen 15-16 *<br>--- | 1-4 | C 08 K 5/43<br>C 08 L 15/00<br>C 08 L 23/16<br>C 08 L 23/22 |
| X | DE-A-1 957 484 (BAYER)<br>* Anspruch 4; Seite 8, Zeilen 21-24; Seite 8, Zeilen 30-31 *<br>----- | 1-4 | |

RECHERCHIERTE SACHGEBIETE (Int. Cl.5)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 20-06-1990 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)